# EUROPÄISCHE PATENTANMELDUNG

(11) **EP 1 535 686 A2**
(43) Veröffentlichungstag der Anmeldung: **01.06.2005**
(21) Anmeldenummer: 04105331.5
(22) Anmeldetag: 27.10.2004
(51) Int. Cl.: B23H 7/26, B23H 9/14, B23H 9/00, B23H 7/28

(54) **Verfahren und Vorrichtung zum Erodieren konischer Bohrungen**

(30) Priorität: 29.11.2003 DE 10355905
(71) Anmelder: ROBERT BOSCH GMBH, 70442 Stuttgart (DE)
(72) Erfinder: Hohmann, Eugen, 96191 Viereth-Trunstadt (DE); Dieterle, Martin, 71636 Ludwigsburg (DE)

(57) **Zusammenfassung**

Es werden ein Verfahren und eine Vorrichtung zum Erodieren konischer Bohrungen vorgeschlagen, die einfach ausführbar sind und mit hoher Prozesssicherheit die höchst genaue Serienfertigung konischer kleinster Bohrungen erlauben.

## Beschreibung

### Stand der Technik

Bei Kraftstoffeinspritzeinlagen von Brennkraftmaschinen werden eine Vielzahl kleiner und kleinster Bohrungen benötigt, deren Durchmesser und Geometrie höchsten Genauigkeitsanforderungen entsprechen muss. Ein Beispiel für eine solche Bohrung sind die Spritzlöcher von Einspritzdüsen oder Injektoren. Diese Spritzlöcher haben Durchmesser von wenigen 10tel Millimetern und müssen teilweise konisch ausgeführt sein. Um die Streuung innerhalb einer Serienfertigung möglichst gering zu halten, müssen sowohl Durchmesser als auch Geometrie dieser Spritzlöcher innerhalb sehr enger Fertigungsgrenzen gehalten werden. Dazu ist es bislang erforderlich gewesen, die Bohrungen durch Erodieren vorzubearbeiten und anschließend durch hydroerosives Verrunden zu kalibrieren.

Der Erfindung liegt die Aufgabe zugrunde, die Herstellung konischer Bohrungen zu vereinfachen bei gleichzeitig verringerter Streuung der Durchmesser und der Konizität der Bohrungen.

Diese Aufgabe wird erfindungsgemäß gelöst durch ein Verfahren zum Erodieren konischer Bohrungen bei welchem mit einer Werkzeugelektrode ein Werkstück angefahren wird und eine konische Bohrung in dem Werkstück durch Versetzen des Werkstücks in eine Taumelbewegung während des Erodierens hergestellt wird.

Durch dieses Verfahren ist es möglich, eine konische Bohrung mit nahezu beliebigen Kegelwinkeln mit sehr großer Genauigkeit herzustellen. Da die Konizität der Bohrung ausschließlich durch die Taumelbewegung des Werkstücks erzielt wird, ist es sehr einfach möglich, den gewünschten Kegelwinkel einmal einzustellen und innerhalb einer Serienfertigung konstant zu halten. Dadurch wird die Genauigkeit der Fertigung von konischen Spritzlöchern erhöht und außerdem kann die Produktionsgeschwindigkeit erhöht werden. Schließlich ist die Ausschussquote durch die Anwendung des erfindungsgemäßen Verfahrens deutlich gegenüber anderen Verfahren zur Herstellung konischer Bohrungen verbessert. Dadurch ergeben sich erhebliche wirtschaftliche Vorteile des erfindungsgemäßen Verfahrens.

In weiterer Ergänzung des erfindungsgemäßen Verfahrens kann vorgesehen sein, dass die Werkzeugelektrode simultan zur Taumelbewegung des Werkstücks eine Vorschubbewegung ausführt. Dadurch ist es möglich, ohne eine Vorbohrung im Werkstück in das volle Material hinein eine konische Bohrung herzustellen. Alternativ ist es auch möglich, wenn als Vorbohrung im Werkstück eine Sacklochbohrung vorhanden ist, aus der Sacklochbohrung eine Durchgangsbohrung zu machen.

Die Rundheit der erfindungsgemäß hergestellten konischen Bohrung kann verbessert werden, wenn die Werkzeugelektrode zusätzlich in eine Drehung versetzt wird.

Wenn mit dem erfindungsgemäßen Verfahren eine zylindrische Bohrung zu einer konischen Bohrung aufgeweitet werden soll, wird die Werkzeugelektrode erfindungsgemäß vor dem Beginn des Erosionsprozesses in die vorhandene Bohrung eingefahren, innerhalb dieser Bohrung ausgerichtet und anschließend der Erosionsvorgang begonnen. Dadurch ist es möglich, den Erosionsvorprozess nur auf die Teile der Bohrung zu beschränken, die ausschließlich mit diesem Verfahren herstellbar sind. Die Vorbohrung kann mit einem anderen Verfahren, welches schneller arbeitet und höhere Abtragleistungen hat, wie beispielsweise Bohren, hergestellt werden.

Eine weitere Verbesserung der Geometrie der nach dem erfindungsgemäßen Verfahren hergestellten konischen Bohrung wird erreicht, wenn das Werkstück in eine Drehung versetzt wird.

Die eingangs genannte Aufgabe wird erfindungsgemäß bei einer Vorrichtung zum Erodieren konischer Bohrungen mit einem Erodierkopf zur Aufnahme einer Werkzeugelektrode und zum Steuern der Vorschubbewegung der Werkzeugelektrode, mit einem Maschinentisch zum Aufspannen des Werkstücks dadurch gelöst, dass das Werkstück durch den Maschinentisch in eine taumelnde Bewegung versetzt werden kann. Dadurch kann mit einer stabförmigen Werkzeugelektrode eine konische Bohrung in ein Werkstück erodiert werden. Je nach Art der taumelnden Bewegung kann eine sich verengende oder sich erweiternde konische Bohrung in das Werkstück erodiert werden. Es ist auch möglich, eine doppelkegelstumpfförmige Bohrung in das Werkstück zu erodieren. Ansonsten werden alle Vorteile des erfindungsgemäß beanspruchten Verfahrens auch mit der erfindungsgemäß beanspruchten Vorrichtung erzielt.

Es hat sich als vorteilhaft erwiesen, wenn die taumelnde Bewegung des Maschinentischs durch eine Gelenkstab-Kinematik, insbesondere eine Hexapod-Kinematik, erzeugt wird. Durch eine solche Kinematik ist es auf einfache Weise möglich, jede gewünschte Taumelbewegung einzustellen.

Um die Positionierung der Werkzeugelektrode zu verbessern und auch kleinste Zustellbewegungen der Werkzeugelektrode zu ermöglichen, ist vorgesehen, dass der Erodierkopf zusätzlich zu den ohnehin vorhandenen Vorschubantrieben in X- und Y-Achse ein zusätzliches Piezo-Positioniersystem aufweist. Solche Piezo-Positioniersysteme sind sehr genau und ermöglichen kleinste Zustellbewegungen. Dadurch kann der gewünschte Durchmesser einer zylindrischen oder konischen Bohrung sehr genau eingestellt werden. Da der Stellweg eines Piezo-Positioniersystems in der Regel relativ klein ist, wird der Erodierkopf von einem konventionellen Positioniersystem vorgenommen. Anschließend erfolgen das genaue Ausrichten der Werkzeugelektrode relativ zu einer vorgebohrten Bohrung oder zum Werkstück und das Zustellen der Werkzeugelektrode zum Erreichen des gewünschten Bohrungsdurchmessers mit Hilfe des Piezo-Positioniersystems.

Weitere Vorteile und vorteilhafte Ausgestaltungen der Erfindung können der nachfolgenden Zeichnung, deren Beschreibung und den Patentansprüchen entnommen werden.

### Zeichnungen

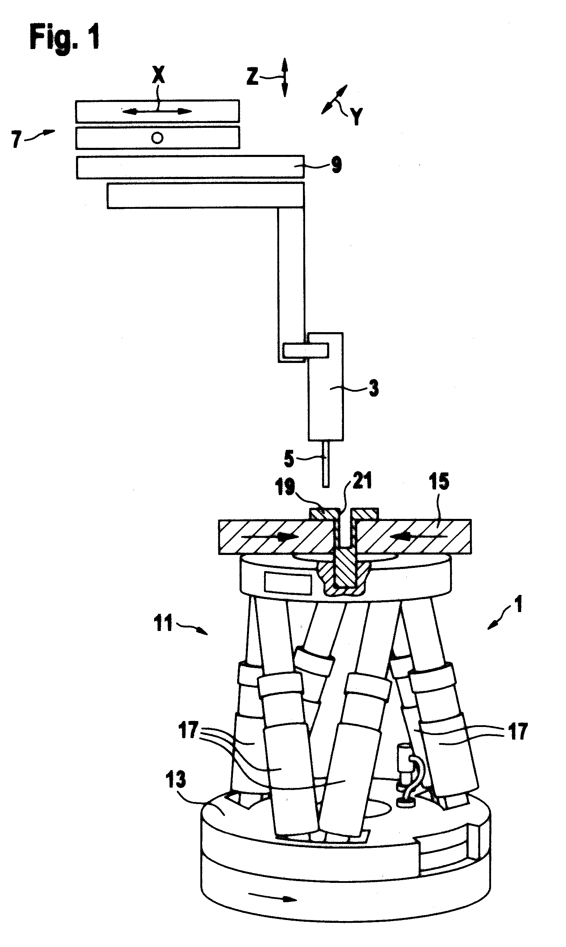

Es zeigen
- Fig. 1: eine erfindungsgemäße Vorrichtung zum Erodieren in stark vereinfachter Form,
- Fig. 2: ein Detail des Ausführungsbeispiels gemäß Fig. 1, und
- Fig. 3: eine Darstellung der Relativbewegung von Werkstück und Werkzeugelektrode während des Erosionsvorgangs.

### Beschreibung der Ausführungsbeispiele

Die erfindungsgemäße Vorrichtung zum Erodieren konischer Bohrungen besteht im Wesentlichen aus einem Maschinentisch 1 und einem Erodierkopf 3. Der Erodierkopf 3 weist eine stabförmige Werkzeugelektrode 5 auf, die beispielsweise aus Hartmetall hergestellt ist. Der Erodierkopf 3 und mit ihm die Werkzeugelektrode 5 können über ein Positioniersystem 7 in X-, Y- und Z-Richtung verfahren werden. Die Verfahrwege in diesen Achsen mit Hilfe der Positioniereinrichtung 7 können beispielsweise jeweils 80 mm bis etwa 120 mm betragen. Damit kann die notwendige Relativbewegung zwischen Erodierkopf 3 und Maschinentisch 1 ausgeführt werden.

Da mit der erfindungsgemäßen Vorrichtung zum Erodieren konischer Bohrungen kleinste Bohrungen mit einem Durchmesser von wenigen 10tel Millimetern hergestellt werden sollen, ist die Positioniergenauigkeit der Positioniereinrichtung 7 nicht groß genug. Deshalb ist eine zusätzliche Piezo-Positioniereinrichtung 9 vorgesehen, die kleinste Stellbewegungen in Richtung der X-Achse und der Y-Achse ermöglicht. Die Genauigkeit der Piezo-Positioniereinrichtung 9 ist sehr hoch, allerdings ist der Verfahrweg auf Bruchteile von einem Millimeter beschränkt. Durch die Kombination der Positioniereinrichtung 7 mit der Piezo-Positioniereinrichtung 9 ist es möglich, ausreichend große Stellbewegungen durchzuführen und anschließend kleinste Stellbewegungen mit höchster Genauigkeit durchzuführen.

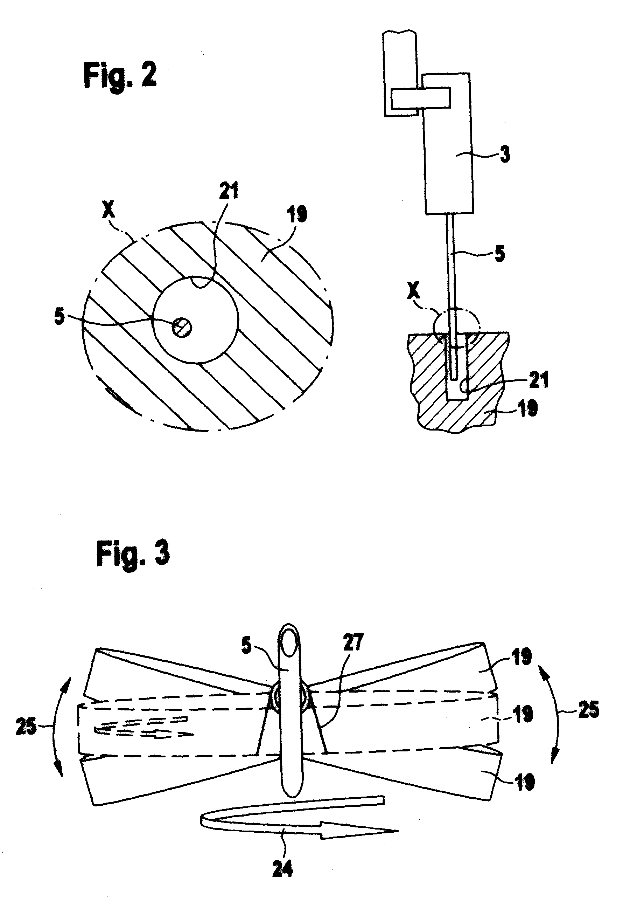

Der Maschinentisch 1 umfasst unter anderem einen sogenannten Hexapod 11. Der Hexapod 11 besteht aus einer Grundplatte 13 und einer Werkstückaufnahme 15. Zwischen der Grundplatte 13 und der Werkstückaufnahme 15 sind sechs Gelenkstäbe 17, deren Länge veränderbar ist, angeordnet. Durch eine geeignete Ansteuerung der Gelenkstäbe 17 kann die Werkstückaufnahme 15 nahezu jede beliebige Bewegung ausführen. Im Zusammenhang mit der vorliegenden Erfindung ist von besonderem Interesse, dass die Werkstückaufnahme 15 ein Werkstück 19 in eine Taumelbewegung versetzen kann. Die Taumelbewegung wird nachfolgend anhand der Figur 3 noch im Detail erläutert.

In dem Werkstück 19 ist eine Sacklochbohrung 21 vorgebohrt. Wenn nun die zylindrische Sacklochbohrung 21 in eine konische Bohrung umgearbeitet werden soll, dann fährt die Werkzeugelektrode 5 in die Sacklochbohrung 21 ein, wie dies vergrößert in Figur 2 dargestellt ist. Im rechten Teil der Figur 2 ist die Werkzeugelektrode 5 schon teilweise in die Sacklochbohrung 21 eingetaucht. Allerdings ist die Werkzeugelektrode 5 noch nicht mittig in der Sacklochbohrung 21 positioniert. Dies ist auch anhand des Details x der Figur 2 verdeutlicht.

In dem Detail x wird eine Ansicht von oben auf das Werkstück 19 mit der Sacklochbohrung 21 und der teilweise in die Sacklochbohrung 21 eingetauchten Werkzeugelektrode 5 dargestellt. In diesem Zustand kann die Werkzeugelektrode 5 mit Hilfe der Piezo-Positioniereinrichtung 9 genau zentrisch zur Sacklochbohrung 21 ausgerichtet werden. Anschließend wird das Werkstück 19 mit Hilfe des Hexapoden 11 in eine Taumelbewegung, angedeutet durch die Pfeile 25, versetzt, wie dies in der Figur 3 veranschaulicht wurde.

Unterhalb der Grundplatte 13 des Hexapoden 11 ist eine Dreheinrichtung 23 vorgesehen mit deren Hilfe der Hexapod 11 und damit auch das Werkstück 19 zusätzlich in eine Drehbewegung, angedeutet durch den Pfeil 24,versetzt werden kann. Wenn diese Taumelbewegung des Werkstücks 19, die durch den Hexapoden 11 erfolgt, noch durch die Drehbewegung der Dreheinrichtung 23 überlagert wird, verbessert sich die Genauigkeit der konischen Bohrung 27 im Werkstück.

Es liegt auf der Hand, dass durch die Größe der Taumelbewegung des Werkstücks 19 der Kegelwinkel der konischen Bohrung 27 eingestellt werden kann. Um eine möglichst gute Rundheit der konischen Bohrung 27 zu erreichen, empfiehlt es sich, die Taumelbewegung des Werkstücks 19 mit einer anderen Frequenz als der Drehfrequenz des Werkstücks 19 auszuführen.

Die Genauigkeit und die Rundheit der konischen Bohrung 27 kann weiter erhöht werden, indem die Werkzeugelektrode 5 in Drehung versetzt wird (nicht dargestellt).

Durch eine geeignete Ansteuerung des Hexapoden 11 können nicht nur nach unten öffnende konische Bohrungen 27, wie in Figur 3 dargestellt, sondern auch konische Bohrungen, die sich nach oben öffnen, hergestellt werden.

Außerdem ist es möglich, Bohrungen, die aus zwei Kegelstumpfabschnitten mit einem verbindenden zylindrischen Abschnitt bestehen, herzustellen. In diesem Fall müsste der Momentanpol der Taumelbewegung des Werkstücks 19 ungefähr in der Mitte des Werkstücks zwischen Oberseite und Unterseite liegen.

Mit dem erfindungsgemäßen Verfahren können konische Bohrungen mit größter Präzision und Wiederholgenauigkeit einfach und wirtschaftlich hergestellt werden. Dabei wird die Konizität der Bohrung 27 ausschließlich durch die Taumelbewegung des Werkstücks 19 bestimmt und hängt nicht oder nur in sehr geringem Umfang von anderen Parametern des Erosionsprozesses ab. Dadurch ist eine automatische Steuerung des Erosionsvorgangs einfach und mit hoher Prozesssicherheit möglich.

## Patentansprüche

1. Verfahren zum Erodieren konischer Bohrungen, **gekennzeichnet durch** folgende Verfahrensschritte:
• Anfahren einer Werkzeugelektrode (5) an ein Werkstück (19) und
• Erodieren einer konischen Bohrung (27) in dem Werkstück (19) **durch** Versetzen des Werkstücks (19) in eine Taumelbewegung (25) während des Erodierens.

2. Verfahren nach Anspruch 1, **dadurch gekennzeichnet, dass** die Werkzeugelektrode (5) simultan zur Taumelbewegung (25) des Werkstücks (19) eine Vorschubbewegung ausführt.

3. Verfahren nach Anspruch 1 oder 2, **dadurch gekennzeichnet, dass** die Werkzeugelektrode (5) in eine Drehung (24) versetzt wird.

4. Verfahren nach einem der vorhergehenden Ansprüche, **dadurch gekennzeichnet, dass** die Werkzeugelektrode (5) zusätzlich in eine Schwingung versetzt wird.

5. Verfahren nach einem der vorhergehenden Ansprüche, **dadurch gekennzeichnet, dass** die Werkzeugelektrode (5) in eine bereits vorhandene Bohrung (21) im Werkstück (19) eingefahren wird und innerhalb dieser Bohrung (21) ausgerichtet wird bevor der Erosionsprozess gestartet wird.

6. Verfahren nach einem der vorhergehenden Ansprüche, **dadurch gekennzeichnet, dass** das Werkstück (19) zusätzlich in eine Drehung (24) versetzt wird.

7. Vorrichtung zum Erodieren konischer Bohrungen mit einem Erodierkopf(3) zur Aufnahme einer Werkzeugelektrode (5) und zum Steuern der Vorschubbewegung der Werkzeugelektrode (5), mit einem Maschinentisch (1) zum Aufspannen des Werkstücks (19), **dadurch gekennzeichnet, dass** das Werkstück (19) durch den Maschinentisch (1) in eine taumelnde Bewegung versetzt werden kann.

8. Vorrichtung nach Anspruch 7, **dadurch gekennzeichnet, dass** der Maschinentisch (1) eine Gelenkstab-Kinematik, insbesondere eine Hexapod-Kinematik (11), aufweist.

9. Vorrichtung nach einem der Ansprüche 7 oder 8, **dadurch gekennzeichnet, dass** der Erodierkopf (3) ein zusätzliches Piezo-Positioniersystem (9) aufweist.
